# EUROPEAN PATENT APPLICATION

(11) **EP 3 301 944 A1**
(43) Date of publication of application: **04.04.2018**
(21) Application number: 16191632.5
(22) Date of filing: 30.09.2016
(51) Int. Cl.: H04N 21/61, H04N 21/235, H04N 21/2343, H04N 21/2365

(54) **A METHOD AND A SYSTEM FOR DELIVERING OVER-THE-TOP CONTENT IN A CONSTANT BIT RATE TELEVISION NETWORK**

(71) Applicant: Advanced Digital Broadcast S.A., 1292 Chambesy (CH)
(72) Inventor: Lipczynski, Jacek, 65-119 Zielona Gora (PL)
(74) Representative: Kancelaria Eupatent.pl Sp. z.o.o

(57) **Abstract**

A method for delivering an over-the-top (OTT) content in a constant bit rate television network, comprising the steps of: receiving (505) an OTT content data from an OTT content source (110); transferring (507) the OTT content data to a cache memory (330) until a minimum threshold of data amount is stored in the cache memory (330); executing (511) a first signal processing stage to decapsulate the OTT content stored in the cache memory (330) to elementary stream data; executing (512) a second signal processing stage to convert the elementary stream data to a transport stream data; providing (513) the transport stream data to a player (360) to generate a constant bit rate stream; and transmitting the constant bit rate stream over the television network.

## Description

### TECHNICAL FIELD

A method and a system for delivering over-the-top television (OTT) content in a constant bit rate television network, such as a cable network utilizing QAM or QPSK infrastructure.

### BACKGROUND

Typically, television programming is delivered by means of a cable television system utilizing one of Digital Video Broadcasting (DVB) standards - DVB-S/S2/C/C2/T/T2. The DVB standards utilize a QAM (Quadrature Amplitude Modulation) or QPSK (Quadrature Phase Shift Keying) modulation infrastructure for transferring data which have a constant bit rate and a push mode which means the content is constantly available from a source either as ready to broadcast files (e.g. clips) or is received from some other providers in a broadcast mode as well, regardless on the amount subscribers watching the program. Typically, in the DVB standard, an audio and video content is coded and sent in a MPEG-2 or MPEG-4 compression system.

Over-the-top television (OTT) is gaining in popularity as an alternative in television broadcasting. It provides television programs, which are offered by stationary broadcasters (such as cable television), over the Internet. In some cases part of a programming content is available only in the OTT form - for example due to lack of satellite broadcast of specific channels in a given region. Therefore, this could be an important source of signal for cable operator(s) who would like to enrich their programming offer by adding the OTT channel (for example, community specific channels (e.g. a Chinese community channel for a cable television network located in Europe where there is no Chinese satellite broadcast available).

The OTT type of transmission runs on top of Ethernet traffic and uses VBR (Variable Bit Rate) in order to save transmission bandwidth. It utilizes a pull mechanism, wherein each user requests a dedicated individual transmission. When there are no subscribers, the signal is not transmitted. As mentioned above, the cable broadcast television uses CBR (Constant Bit Rate) transmission, such as QAM and QPSK that are used by DVB-S/S2/C/T/T2. As a consequence, a one-to-one conversion of these signals is not possible. In order to make an OTT channel available over a cable television, a system is required that on one hand could act as "client device" e.g. tablet or PC, while on the other hand would be capable of generating a DVB compliant stream that could be sent via the cable the network as a typical broadcast channel.

Therefore, there is a need to provide a method and a system for conversion of the OTT content in order to make it available in a cable television broadcast.

### SUMMARY

There is disclosed a method for delivering an over-the-top content in a constant bit rate television network, comprising the steps of: receiving an OTT content data from an OTT content source; transferring the OTT content data to a cache memory until a minimum threshold of data amount is stored in the cache memory; executing a first signal processing stage to decapsulate the OTT content stored in the cache memory to elementary stream data; executing a second signal processing stage to convert the elementary stream data to a transport stream data; providing the transport stream data to a player to generate a constant bit rate stream; and transmitting the constant bit rate stream over the television network.

The constant bit rate television network can be a cable television network utilizing QAM or QPSK infrastructure.

The first signal processing stage may further comprise deciphering the OTT content stored in the cache memory.

The OTT content source can be defined by a universal resource locator address.

There is also disclosed a non-transitory computer readable storage medium comprising instructions that, when executed by a computer, enable delivering an over-the-top content in a constant bit rate television network in accordance with the method as disclosed herein.

There is also disclosed a system for converting an over-the-top content to a constant bit rate content, the system comprising: an OTT receiver configured to receive an OTT content data from an OTT content source; a cache memory configured to store the received OTT content data; a signal analyzer configured to detect an encapsulation method and parameters of the received OTT content data; a first signal processor configured to decapsulate the OTT content stored in the cache memory to elementary stream data; a second signal processor configured to convert the elementary stream data to a transport stream data; and a player configured to generate a constant bit rate stream.

There is also deisclosed a head-end system comprising: a signal processing block for receiving and re-encode broadcast content; a system for converting an over-the-top content to a constant bit rate content as described herein; and a multiplexer for multiplexing the broadcast content from the signal processing block and the constant bit rate content from the system.

### BRIEF DESCRIPTION OF DRAWINGS

Further details and features of the present invention, its nature and various advantages will become more apparent from the following detailed description of the preferred embodiments shown in drawings, in which:
Fig. 1 presents a transmission system structure;
Fig. 2 presents an operator's head-end structure;
Fig. 3 presents an OTT to MPEG-2 TS signal processing circuit;
Fig. 4 presents a flowchart of data detection;
Fig. 5 presents a flowchart of data processing.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DETAILED DESCRIPTION

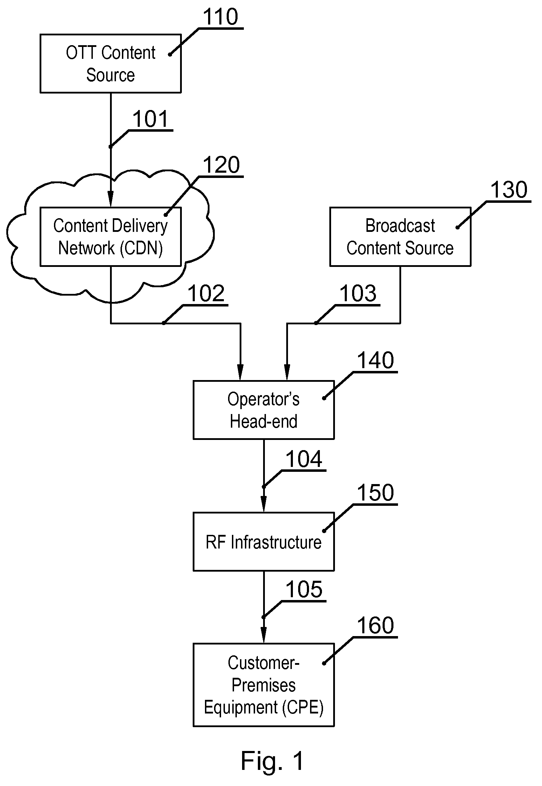

Fig. 1 presents a transmission system structure. A typical television broadcast system utilizes a broadcast content source 130 that usually consists of satellite and terrestrial reception blocks responsible for receiving signal, deciphering, if applicable, and de-multiplexing it. Such signal is delivered via a transmission channel 103 to an operator's head-end (a master facility for receiving television signals for processing and distribution over a cable television system) 140 where the operator may transcode the received signals and multiplex them according to local needs. Finally, the signal is modulated in order to be delivered via a transmission channel 104 to a Radio Frequency (RF) infrastructure 150 that connects, via a transmission channel 105, the head-end and Customer Premises Equipment (CPE) 160 located at subscriber's homes.

Alternatively, the signal may be delivered to the operator's head-end 140 via a transmission channels 101, 102 from an Over-The-Top television (OTT) content source 110 using a Content Delivery Network (CDN) 120 that acts as a cache for the OTT signals. The content delivery network may be a part of public Internet or a part of a private network.

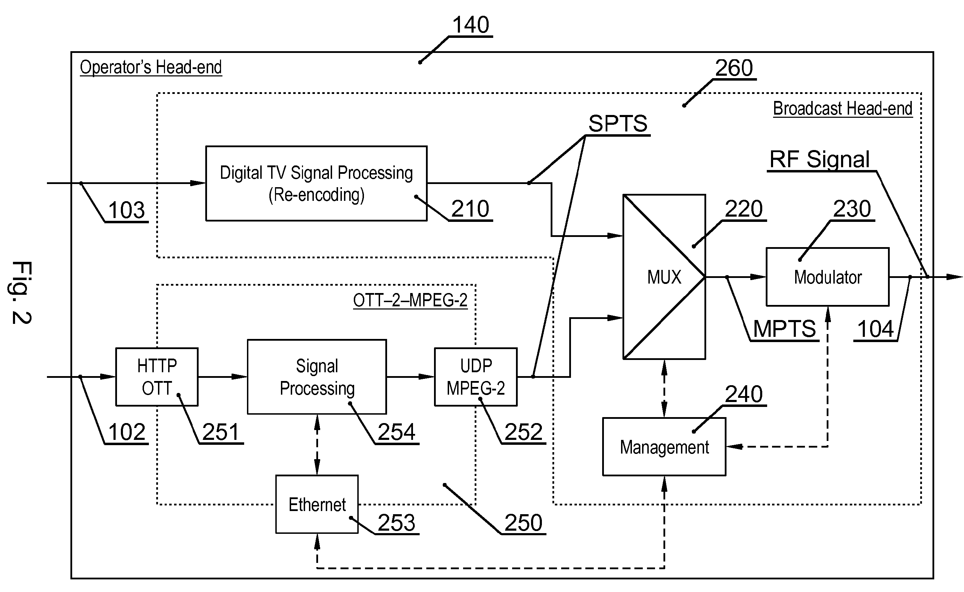

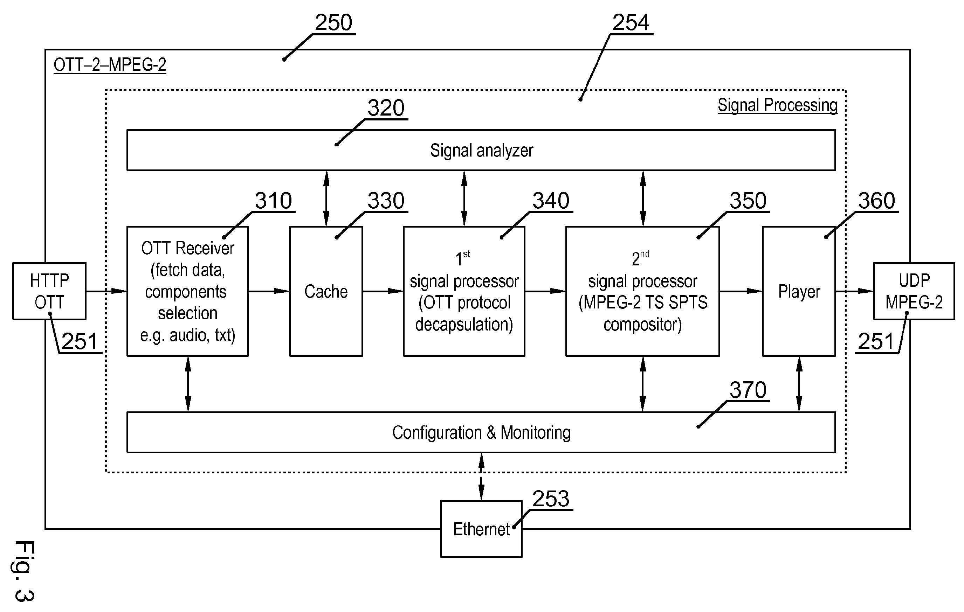

Fig. 2 presents an overview of an operator's head-end. The operator's head-end 140 generally comprises a broadcast head-end 260 and an OTT to MPEG-2 converter 250. The broadcast head-end 260 receives the signals from the broadcast content source 130 via the transmission channel 103 which delivers them to a digital signal processing block 210 which is responsible for re-encoding the signal and delivering it further to a multiplexer (MUX) 220. The MUX 220 is responsible for multiplexing all coming input signal, delivered in a Single Program Transport Stream (SPTS) share into an MPEG-2 Transport Stream (TS) compliant signal that further is provided to a modulator 230. The Modulator 230 is responsible for radio frequency signal modulation which is further transmitted via the 104 channel. The broadcast head-end 260 further comprises a management unit 240 which controls the operation of the MUX 220, the modulator 230 and the OTT to MPEG-2 converter 250. The OTT to MPEG-2 converter 250 comprises an audio video signal processing unit 254 (presented in more details in Fig. 3) with a HTTP OTT content input connector 251, an UDP (User Datagram Protocol) MPEG-2 output connector 252 and an Ethernet connector 253 connected to the management unit 240 for controlling and monitoring the processor. The transmission channel 102 is connected through an input connector 251 and delivers compressed and optionally ciphered OTT data to an OTT receiver 310 in the form defined within a configuration and monitoring module 370 specifying an URL configuration and credentials. Next, the signal is cached 330 and subsequently provided to a first signal processor module 340 as well as to a signal analyser 320. The signal analyser 320 is responsible for detecting an encapsulation method, such as HLS (HTTP Live Streaming), MPEG-DASH (Dynamic Adaptive Streaming over HTTP), etc.; bitrate of the stream and a ciphering method, if applicable. The sampling of the signal results in providing an appropriate dynamic configuration data to the first signal processor 340. The first signal processor 340 is responsible for an OTT protocol de-capsulation and optionally deciphering. Raw data in a shape of ES (Elementary Stream) or PES (Program Elementary Stream) is provided to a second signal processor module 350 in order to create an MPEG-2 TS compliant SPTS signal. Next, this signal is provided to a player 360 that is responsible for streaming the data according to cable broadcast standards, i.e. the constant bit rate (CBR). Further, the signal is delivered to the MUX 220.

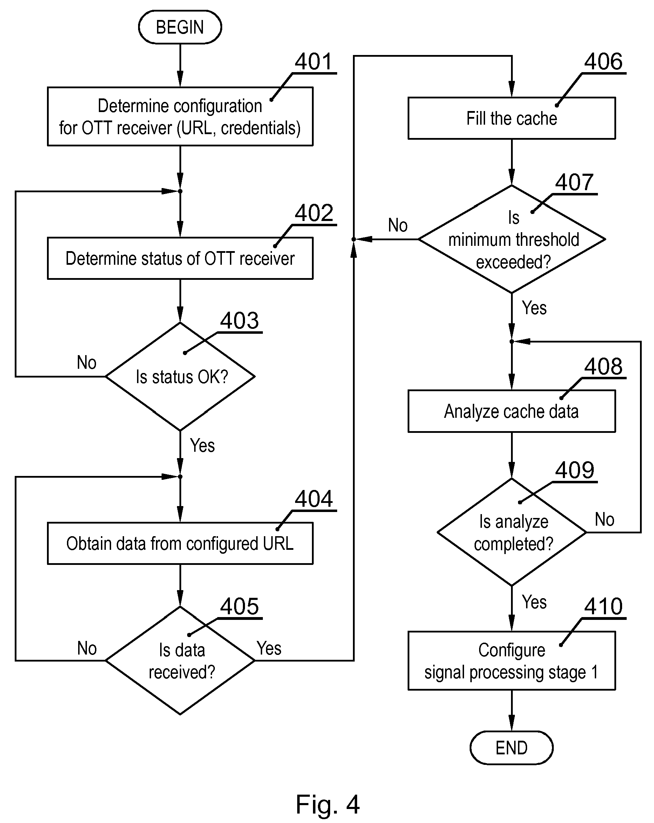

Fig. 4 presents a flowchart of data detection. In the first step 401 the system determines a configuration for the OTT receiver, in particular the URL address and credentials. Next, in step 402, the OTT receiver status is determined and if the status is determined as correct in step 403, data is obtained from the configured URL in step 404. If the data is received in step 405, it is transferred to cache and the cache is filled in step 406. Otherwise, if the data is not received, the procedure loops back to step 404. In step 407 the system checks if the minimum threshold of data amount is exceeded. If not, the cache is further filled with data, otherwise in step 408 the system analyses the cache data. In step 409 it is checked if the analysis is completed, if so in step 410 the system configures the first signal processing stage and finishes the procedure of data detection, otherwise the procedure loops back to step 408.

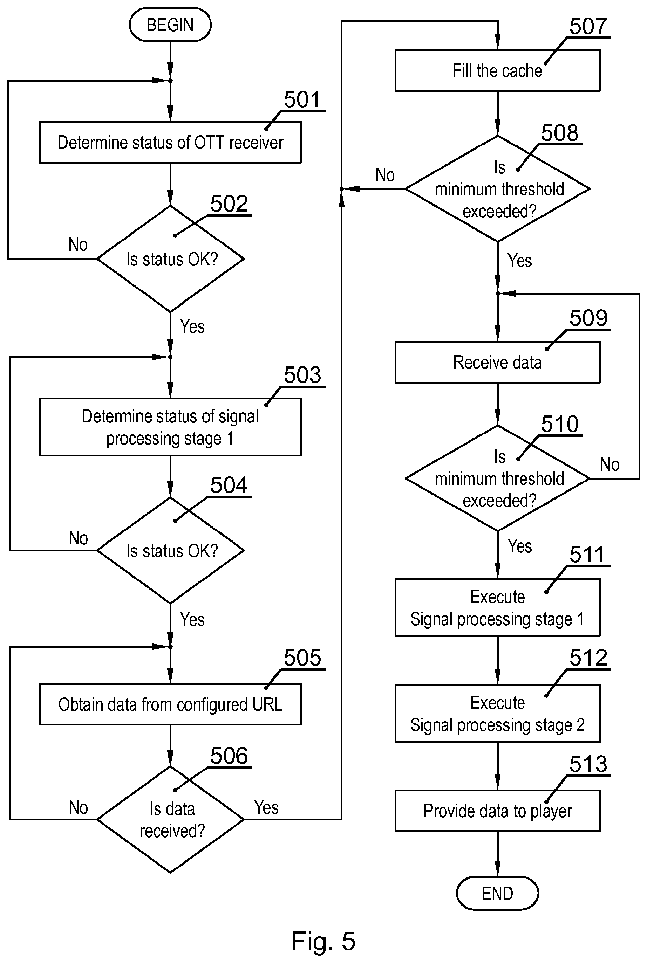

Fig. 5 presents a flowchart of data processing. In the first step 501 the status of the OTT receiver is determined. In step 502 the status is verified and if the status is not correct, the procedure loops back to the first step 501, otherwise it continues to step 503 where the status of the first signal processing stage is determined. In step 504 the status of the first signal processing stage is verified and if it is not correct, the procedure loops back to step 503. Otherwise the procedure continues to step 505, wherein data (i.e. the OTT content) is obtained from its source, such as the configured URL (Uniform Resource Locator). If the data is received in step 506, it is filled to the cache in step 507. Otherwise, the procedure loops back to step 505. In step 508 the system checks if the minimum threshold of data in the cache is exceeded. If not, the cache is further filled with data, otherwise in step 509 the data is further received until the minimum threshold is received 510. In step 511 the system executes the first signal processing stage and in step 512 it executes the second signal processing stage. In the final step 513 the data is provided to a player.

The minimum threshold value defining the minimum amount of content to be stored in the cache memory 330 before processing the data in the first signal processing stage depends on OTT delivery method and may vary. For example, it can be set to 3 consequent segment for HLS.

It can be easily recognized, by one skilled in the art, that the aforementioned method for delivering content may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for delivering an over-the-top (OTT) content in a constant bit rate television network, comprising the steps of:
- receiving (505) an OTT content data from an OTT content source (110);
- transferring (507) the OTT content data to a cache memory (330) until a minimum threshold of data amount is stored in the cache memory (330);
- executing (511) a first signal processing stage to decapsulate the OTT content stored in the cache memory (330) to elementary stream data;
- executing (512) a second signal processing stage to convert the elementary stream data to a transport stream data;
- providing (513) the transport stream data to a player (360) to generate a constant bit rate stream; and
- transmitting the constant bit rate stream over the television network.

2. The method according to claim 1, wherein the constant bit rate television network is a cable television network utilizing QAM or QPSK infrastructure.

3. The method according to any of previous claims, wherein the first signal processing stage further comprises deciphering the OTT content stored in the cache memory (330).

4. The method according to any of previous claims, wherein the OTT content source (110) is defined by a universal resource locator (URL) address.

5. A non-transitory computer readable storage medium comprising instructions that, when executed by a computer, enable delivering an over-the-top (OTT) content in a constant bit rate television network in accordance with the method according to any of claims 1-4.

6. A system for converting an over-the-top (OTT) content to a constant bit rate content, the system comprising:
- an OTT receiver (310) configured to receive an OTT content data from an OTT content source (310);
- a cache memory (330) configured to store the received OTT content data;
- a signal analyzer (320) configured to detect an encapsulation method and parameters of the received OTT content data;
- a first signal processor (340) configured to decapsulate the OTT content stored in the cache memory (330) to elementary stream data;
- a second signal processor (350) configured to convert the elementary stream data to a transport stream data; and
- a player (360) configured to generate a constant bit rate stream.

7. A head-end system comprising:
- a signal processing block (210) for receiving and re-encode broadcast content;
- a system (250) for converting an over-the-top (OTT) content to a constant bit rate content according to claim 6; and
- a multiplexer (220) for multiplexing the broadcast content from the signal processing block (210) and the constant bit rate content from the system (250).
